# EUROPÄISCHE PATENTANMELDUNG

(11) **EP 0 627 600 A2**
(43) Veröffentlichungstag der Anmeldung: **07.12.1994**
(21) Anmeldenummer: 94107794.3
(22) Anmeldetag: 19.05.1994
(51) Int. Cl.: F24C 15/18, A47J 37/06

(54) **Ortsbewegliche Grillplatte**

(30) Priorität: 19.05.1993 DE 9307675 U
(71) Anmelder: Keuchel, Josef, D-82256 Fürstenfeldbruck (DE)
(72) Erfinder: Keuchel, Josef, D-82256 Fürstenfeldbruck (DE)

(57) **Zusammenfassung**

1.1. Die Erfindung betrifft eine ortsbewegliche Grillplatte mit einer glatten oder strukturierten Oberseite als Grillfläche mit umlaufender Soßenrille und einer Unterseite sowie seitlichen Traggriffen.

1.2. Die Aufgabe der Erfindung besteht darin, die bewegliche Grillplatte der genannten Art zu vereinfachen und unabhängig von elektrischen Anschlüssen zu machen.

2. Die ortbewegliche Grillplatte der genannten Art ist so ausgebildet, daß die Unterseite der Grillplatte zur Fremdbeheizung als Wärmeübertragungskontaktfläche ausgebildet ist, die zwecks Aufheizung auf das Kochfeld, insbesondere Cerankochfeld, eines Elektroherdes auflegbar ist, und daß die Grillplatte aus einem Material hoher Wärmespeicherkapazität besteht.

## Beschreibung

Die Erfindung betrifft eine ortsbewegliche Grillplatte mit einer glatten oder strukturierten Oberseite als Grillfläche mit umlaufender Soßenrille und einer Unterseite sowie seitlichen Traggriffen.

Derartige Grillplatten aus Steinmaterialien oder Metall sind gewöhnlich mit elektrischen Heizelementen versehen, die über ein an eine Steckdose anzuschließendes Kabel auf die gewünschte Temperatur hochgeheizt werden, damit der Grillvorgang stattfinden kann. Die elektrische Ausrüstung solcher Platten ist jedoch nicht nur kostenaufwendig sondern insofern auch benutzerunfreundlich, als das elektrische Anschlußkabel gewöhnlich hinderlich ist.

Die Aufgabe der Erfindung besteht deshalb darin, die bewegliche Grillplatte der genannten Art zu vereinfachen und unabhängig von elektrischen Anschlüssen zu machen.

Diese Aufgabe wird erfindungsgemäß dadurch gelöst, daß die Unterseite der Grillplatte zur Fremdbeheizung als Wärmeübertragungskontaktfläche ausgebildet ist, die zwecks Aufheizung auf das Kochfeld, insbesondere Cerankochfeld, eines Elektroherdes auflegbar ist, und daß die Grillplatte aus einem Material hoher Wärmespeicherkapazität besteht.

Die Erfindung wird nachfolgend anhand des in der Zeichnung dargestellten Ausführungsbeispiels näher erläutert. In der Zeichnung zeigen:
- Fig. 1: eine schematische teilperspektivische Ansicht eines Elektroherdes, auf dessen Kochfeld eine Grillplatte aufgelegt ist,
- Fig. 2: eine vergrößerte perspektivische Draufsicht der Grillplatte von Fig. 1 und
- Fig. 3: eine Querschnittsansicht der Grillplatte von Fig. 2 längs der Linie A-A in Fig. 2

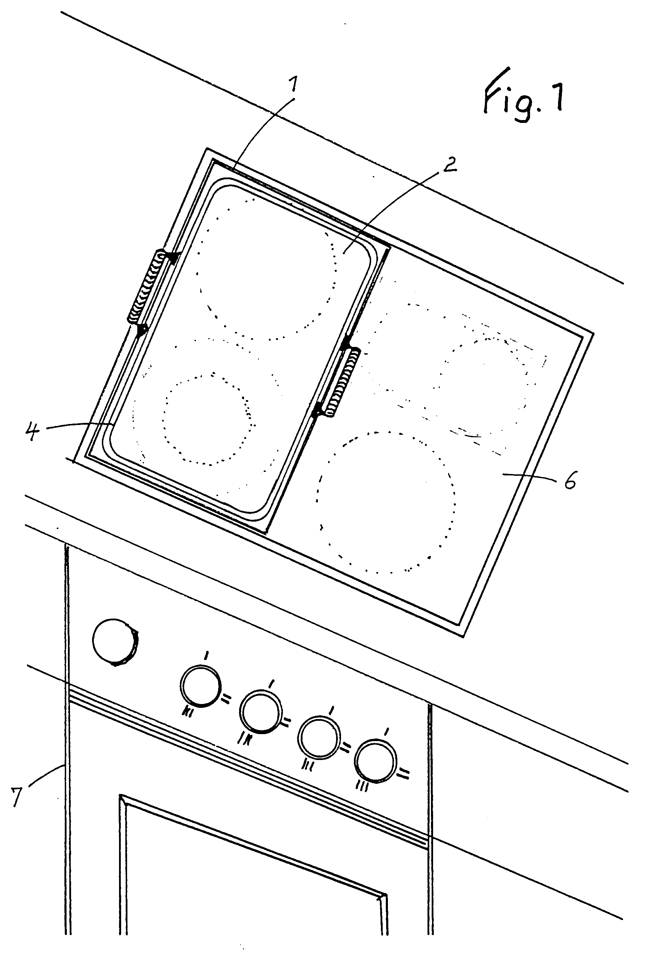

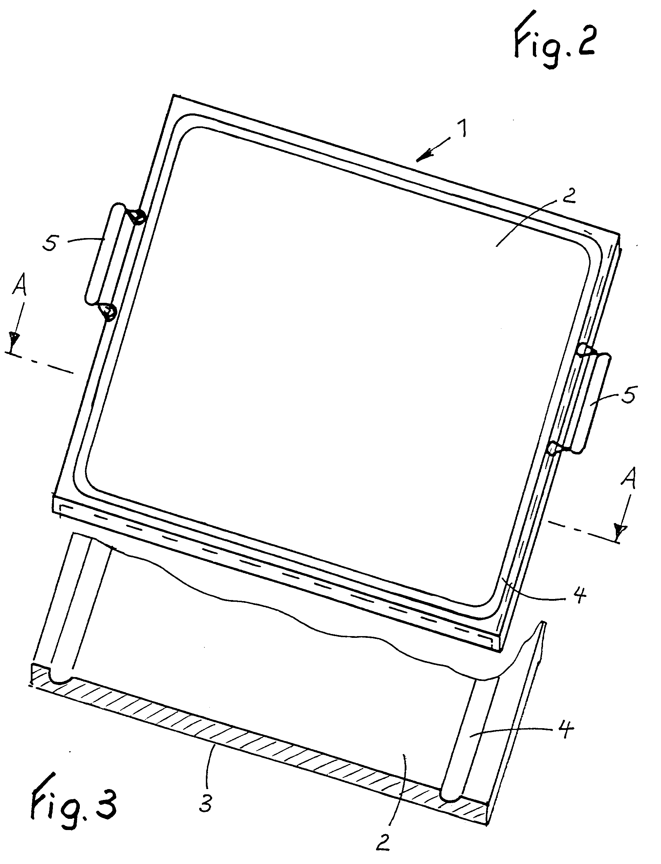

Die in Fig. 1 gezeigte Grillplatte 1 weist, wie den Figuren 2 und 3 entnommen werden kann, eine plane Unterseite 3 auf, mit der sie auf einem Ceranfeld 6 eines Elektroherdes 7 aufliegt. Die Größe der Platte entspricht etwa der halben Ceranfeldgröße. Die Oberseite 2 der Grillplatte kann ebenfalls plan bzw. glatt sein, jedoch auch eine Riffelung oder andersartige Strukturierung besitzen, da auf ihr die zu grillenden Produkte, beispielsweise Steaks, angeordnet werden. Die viereckige Platte, die jedoch auch andere Umrißformen aufweisen kann, ist mit einer umlaufenden Saftrille 4 versehen, in der sich der beim Grillen aus dem Fleisch austretende Saft sammelt.

Die Grillplatte weist zwei seitliche Griffe 5 auf, mit denen sie auf die Herdplatte aufgesetzt bzw. von dieser Herdplatte weggenommen werden kann. Die Grillplatte hat keine eigene Heizung, wie sie beispielsweise bei den bekannten Grillplatten in Form von Heizdrähten eingebaut sind, die über eine elektrische Anschlußheizung mit Strom versorgt werden, sondern wird von dem Kochfeld, also beispielsweise bei der hier gezeigten Ausführungsform von dem Ceranfeld 6, beheizt. Die Temperaturregulierung erfolgt dabei durch die Kochfeldregler am Elektroherd. Der Grillvorgang wird durch ein Vorheizen von ca. 5 Minuten auf höchster Stufe ermöglicht. Zu diesem Zweck besteht die Grillplatte aus einem Material hoher Wärmespeicherkapazität und Wärmeleitung, so daß der Kontakt zwischen der Oberfläche des elektrisch erhitzten Kochfeldes und der Unterseite 3 der Grillplatte zu einer schnellen Aufheizung der Platte führt.

Der Grillvorgang findet somit auf der auf dem Kochfeld liegenden Grillplatte statt. Andererseits kann die erhitzte Grillplatte auch vom Kochfeld entfernt werden, um den Grillvorgang an anderer Stelle fortzuführen, da die in der Platte gespeicherte Wärme dies ermöglicht. Die Oberseite 2 der Grillplatte läßt sich nach der Benutzung bei abklingender Hitze leicht mit Zitronenkonzentrat und Reibeschwamm reinigen.

Nach dem Abkühlen wird die Grillplatte vom Kochfeld abgehoben, wenn dies nicht schon vorher geschehen ist, um den Grillvorgang an anderer Stelle, beispielsweise im Garten, weiterzuführen, woraufhin das Kochfeld in üblicher Form benutzt werden kann.

Die obige Konstruktion ermöglicht die Benutzung üblicher Elektroherde zum Grillen, ohne daß es hierfür einer konstruktiven Änderung im Kochfeld des Herdes bedarf. Die Grillplatte selbst ist aufgrund der Tatsache, daß sie mit keinerlei elektrischen Einrichtungen versehen ist, preiswert herzustellen und leicht zu handhaben.

## Patentansprüche

1. Ortsbewegliche Grillplatte mit einer glatten oder strukturierten Oberseite als Grillfläche mit umlaufender Soßenrille und einer Unterseite sowie seitlichen Traggriffen, **dadurch gekennzeichnet,**
daß die Unterseite (3) der Grillplatte (1) zur Fremdbeheizung als Wärmeübertragungskontaktfläche ausgebildet ist, die zwecks Aufheizung auf das Kochfeld, insbesondere Cerankochfeld, eines Elektroherdes auflegbar ist, und daß die Grillplatte aus einem Material hoher Wärmespeicherkapazität besteht.

2. Ortsbewegliche Grillplatte nach Anspruch 1,
**dadurch gekennzeichnet,** daß die Unterseite (3) plan ist.

3. Ortsbewegliche Grillplatte nach Anspruch 1,
**dadurch gekennzeichnet,** daß die Unterseite (3) mit Aussparungen zur Aufnahme wenigstens einer erhabenen Kochplatte eines Kochfeldes versehen ist.

4. Ortsbewegliche Grillplatte nach einem der Ansprüche 1-3,
**dadurch gekennzeichnet,** daß die Grillplatte (1) so bemessen ist, daß sie das halbe Kochfeld des Elektroherdes abdeckt.

5. Ortsbewegliche Grillplatte nach einem der Ansprüche 1-3,
**dadurch gekennzeichnet,** daß die Grillplatte (1) so bemessen ist, daß sie das gesamte Kochfeld des Elektroherdes abdeckt.
